# EUROPÄISCHE PATENTANMELDUNG

(11) **EP 3 266 688 A1**
(43) Veröffentlichungstag der Anmeldung: **10.01.2018**
(21) Anmeldenummer: 17179013.2
(22) Anmeldetag: 30.06.2017
(51) Int. Cl.: B62K 3/04

(54) **FAHRRADRAHMEN**

(30) Priorität: 07.07.2016 DE 202016004206 U
(71) Anmelder: Canyon Bicycles GmbH, 56073 Koblenz (DE)
(72) Erfinder: Schuchnigg, Lukas, 56068 Koblenz (DE); Forst, Alexander, 56077 Koblenz (DE)
(74) Vertreter: dompatent von Kreisler Selting Werner - Partnerschaft von Patent- und Rechtsanwälten mbB

(57) **Zusammenfassung**

Ein Fahrradrahmen weist ein Unterrohr (10) ein Sattelrohr (16) und eine Oberrohr (20) auf. Das Oberrohr (20) weist einen ersten Abschnitt (28) auf, der ausgehend vom Sattelrohr (16) steigend ausgebildet ist. Hierdurch ist ein Raum (38) zwischen Unterrohr (10), Sattelrohr (16) und Oberrohr (20) vergrößert, so dass das Tragen des Fahrradrahmens auf der Schulter vereinfacht ist.

## Beschreibung

Die Erfindung betrifft einen Fahrradrahmen, insbesondere einen Rennradrahmen. Besonders geeignet ist der erfindungsgemäße Fahrradrahmen für ein Cossrad, insbesondere ein Cyclocrossrad.

Hin und wieder ist es erforderlich Fahrräder zu tragen. Insbesondere Crossräder müssen im Gelände hin und wieder getragen werden. Besondere Anforderungen bestehen insbesondere bei Crossrädern, die in Wettkämpfen, wie bei Cyclocross Rundstrecken eingesetzt werden. Bei Crossrädern handelt es sich um speziell ausgestaltete Rennräder mit denen insbesondere auch Wettkämpfe im Gelände ausgetragen werden können. Insbesondere Crossräder müssen daher bisweilen getragen werden. Das Tragen erfolgt üblicherweise derart, dass das Oberrohr des Fahrradrahmens auf die Schulter gelegt wird. Aufgrund der Rahmengestaltung des als Diamant-Rahmens ausgebildeten Fahrradrahmens ist das Handling beim Tragen schwierig.

Aufgabe der Erfindung ist es, einen Fahrradrahmen zu schaffen, bei dem es sich insbesondere um einen Fahrradrahmen für Crossräder handelt, mit dem das Handling beim Tragen verbessert ist. Hierbei ist es bevorzugt, dass die Richtlinien der UCI eingehalten werden.

Die Lösung der Aufgabe erfolgt erfindungsgemäß durch die Merkmale des Anspruchs 1.

Der erfindungsgemäße Fahrradrahmen weist ein Unterrohr, ein Oberrohr und ein Sattelrohr auf. Das Unterrohr ist zwischen einer Tretlageraufnahme und einem Gabelrohr, das zur Aufnahme des Gabelschaft der Vorderradgabel dient, angeordnet. Das Sattelrohr ist ebenfalls mit der Tretlageraufnahme verbunden. Gegebenenfalls kann diese Verbindung auch mittelbar sein, so dass das Sattelrohr beispielsweise nahe der Tretlageraufnahme mit dem Unterrohr verbunden ist. Das Sattelrohr ist nach oben geführt, wobei das obere offene Ende zur Aufnahme des den Sattel tragenden Sattelstützrohrs dient. Das Oberrohr ist mit dem Sattelrohr und dem Gabelrohr verbunden. Erfindungsgemäß ist das Oberrohr gegenüber herkömmlichen Oberrohren derartiger Fahrradrahmen, insbesondere Fahrradrahmen für Crossräder, zumindest im Bereich der Verbindung mit dem Sattelrohr höher angeordnet. Das Oberrohr weist daher in einem mit dem Sattelrohr verbundenen ersten Abschnitt einen Winkel zur horizontalen von mehr als 30°, vorzugsweise mehr als 40° und besonders bevorzugt mehr als 60° auf. Die horizontale ist hierbei eine zu einer horizontalen Aufstandsfläche eines montierten Fahrrads parallele Ebene bzw. Gerade. Ausgehend vom Sattelrohr steigt das Oberrohr daher erfindungsgemäß im ersten Abschnitt an. Hierdurch kann im ersten Abschnitt des Oberrohrs ein höheres Gestalten des Oberrohrs realisiert werden. Dies führt dazu, dass der Bereich innerhalb des Oberrohr, des Unterrohrs und des Sattelrohrs größer ist. Hierdurch ist es einfacher das Fahrrad auf der Schulter aufzulegen.

Bei einer alternativen Ausführungsform des Fahrradrahmens ist ein Winkel zwischen dem ersten mit dem Sattelrohr verbundenen Abschnitt des Oberrohrs und einem sich daran anschließenden zweiten Abschnitt des Oberrohrs im Bereich von 120° bis 160°, insbesondere 130° bis 150°. Der zweite Abschnitt des Oberrohrs ist hierbei derjenige Abschnitt, der sich an den ersten Abschnitt in Richtung des Gabelrohrs anschließt und vorzugsweise mit diesem verbunden ist, sofern das Oberrohr keinen weiteren Abschnitt aufweist. Hierdurch ist ebenfalls der Bereich zwischen Oberrohr, Unterrohr und Sattelrohr vergrößert, so dass ein Auflegen des Fahrrads auf die Schulter vereinfacht ist.

Bevorzugt ist eine Kombination der beiden vorstehenden Ausgestaltungen des Fahrradrahmens, so dass das Oberrohr in einem ersten Abschnitt zunächst nach oben ansteigt und sodann mit dem entsprechenden Winkel in Richtung des Gabelrohrs verläuft.

Bei einer weiteren bevorzugten Ausführungsform kann zwischen dem Gabelrohr und dem Sattelrohr eine gerade Linie angeordnet bzw. gezogen werden, die stets innerhalb des Oberrohrs verläuft. Insofern ist der Grad der Abwinklung der einzelnen Teile des Oberrohrs begrenzt. Dies hat insbesondere den Vorteil einer guten Kraftaufnahme und Übertragung zwischen den einzelnen Bauteilen des Fahrradrahmens. Ferner ist hierdurch eine Konformität mit den Regeln des UCI gewährleistet. Die entsprechende Linie verläuft in Seitenansicht vorzugsweise ausgehend von dem Sattelrohr steigend in Richtung des Gabelrohrs. Des Weiteren ist es möglich, dass die Linie einen Verbindungsbereich zwischen dem Oberrohr und dem Gabelrohr berührt bzw. schneidet.

Besonders bevorzugt ist es, dass der erste Abschnitt des Oberrohrs eine Länge von mindestens 5 cm, insbesondere mindestens 7 cm und besonders bevorzugt mindestens 10 cm aufweist. Ferner ist es bevorzugt, dass der erste Abschnitt des Oberrohrs kürzer als 20 cm, insbesondere kürzer als 17 cm und besonders bevorzugt kürzer als 15 cm ist. Hierdurch können entsprechend geeignete Rahmengeometrien ausgestaltet werden. Der erste Abschnitt ist hierbei insbesondere der erste Abschnitt des Oberrohrs zwischen Sattelrohr und dem Bereich in dem der Winkel zum zweiten Abschnitt des Oberrohrs vorgesehen ist.

Vorzugsweise ist der zweite Abschnitt des Oberrohrs geradlinig und mittelbar oder unmittelbar mit dem Gabelrohr verbunden. Der zweite Abschnitt des Oberrohrs weist somit in bevorzugter Ausführungsform keine Winkeländerung in Längsrichtung auf.

Besonders bevorzugt ist es, dass der zweite Abschnitt des Oberrohrs im Wesentlichen horizontal ist. Alternativ kann der zweite Abschnitt des Oberrohrs in Richtung des Gabelrohrs leicht steigend oder leicht fallend verlaufen. Bevorzugt ist es, dass der zweite Abschnitt des Oberrohrs zu einer horizontalen einen Winkel von weniger als 20°, insbesondere von weniger als 10° aufweist.

Bei einer weiteren besonders bevorzugten Ausführungsform ist ein oberes Ende des Sattelrohrs unterhalb einer Oberkante des Übergangsbereiches zwischen dem ersten und zweiten Abschnitt des Oberrohrs angeordnet. Das obere Ende des Sattelrohrs ist das dem Tretlager gegenüberliegende Ende des Sattelrohrs, dass zur Aufnahme des Sattelstützrohrs dient. Der erste und zweite Abschnitt des Oberrohrs weist in Seitenansicht eine Oberkante auf. Im Übergangsbereich handelt es sich somit um den in Seitenansicht höchsten Punkt des ersten Abschnitts des Oberrohrs, da dieses ausgehend von Sattelrohr steigend ausgebildet ist.

Des Weiteren ist es bevorzugt, zwischen einem oberen Ende des Sattelrohrs und dem ersten Abschnitt des Oberrohrs ein Verbindungselement vorzusehen. Dieses verschließt den Zwischenraum zwischen dem oberen Ende des Sattelrohrs und dem ersten Abschnitt des Oberrohrs vorzugsweise vollständig. Hierdurch kann insbesondere die Steifigkeit des Rahmens in diesem Bereich verbessert werden. Insbesondere geht in Seitenansicht eine Kante des oberen Endes des Sattelrohrs stufenlos in eine Oberkante des Verbindungselements und diese wiederum stufenlos in die Oberkante des Übergangsbereichs zwischen dem ersten und zweiten Abschnitts des Oberrohrs über.

Des Weiteren weist der Fahrradrahmen Sattelstreben auf. Diese erstrecken sich von den hinteren Ausfallenden des Fahrradrahmens, die zur Aufnahme des Hinterrades dienen zu dem Sattelrohr. In besonders bevorzugter Ausführungsform gehen die Sattelstreben in den ersten Abschnitt des Oberrohrs über. Hierdurch kann ein guter Kraftverlauf realisiert werden. Besonders bevorzugt ist es hierbei, dass eine Unterkante der Sattelstreben in eine Unterkante des ersten Abschnittes des Oberrohrs insbesondere gradlinig, das heißt ohne Winkeländerung übergeht.

Beim Schultern des Fahrradrahmens kann dieser zunächst mit dem ersten Abschnitt des Oberrohrs aufgesetzt werden. Aufgrund der ansteigenden Ausgestaltung des ersten Abschnitts rutscht der Fahrradrahmen automatisch nach hinten, so dass der Fahrradrahmen im Übergangsbereich zwischen dem ersten und zweiten Abschnitt auf der Schulter aufliegt. Der Übergangsbereich ist hierzu in besonders bevorzugter Ausführungsform abgerundet ausgebildet. Insbesondere die Unterseite des Übergangsbereichs, das heißt die in Richtung des Unterrohrs weisende Seite ist konkav ausgebildet und weist vorzugsweise keine Kanten oder dergleichen auf. Hierdurch ist der Tragekomfort verbessert.

Bei sämtlichen vorstehend beschriebenen Ausführungsformen können die Querschnitte der einzelnen Rahmenelemente unterschiedlich und je nach Design ausgebildet sein.

Ein besonderer Vorteil des erfindungsgemäßen Fahrradrahmens besteht darin, dass durch eine derartige Ausgestaltung des Oberrohrs bei verbessertem Handling zum Tragen des Fahrrads die derzeit geltenden UCI-Richtlinien eingehalten werden. Dies erfolgt bei gleichzeitiger Verwendung eines "normallangen Sattelrohrs". Ein "normallanges Sattelrohr" entspricht von der Dimension dem eines Rennrades.

Erfindungsgemäß ist der Fahrradrahmen besonders bevorzugt für ein Cyclocrossrad geeignet. Hierbei ist es erfindungsgemäß besonders bevorzugt, dass das gesamte Fahrrad beim Tragen auf der Schulter derart aufliegt, dass das Vorderrad gegenüber einer Horizontalen etwas tiefer angeordnet ist bzw. das Fahrrad leicht nach vorne geneigt ist. Hierdurch ist der Tradekomfort erheblich verbessert. Ein derartig vollständiges Fahrrad weist neben dem erfindungsgemäßen Fahrradrahmen die üblichen erforderlichen Bauteile, wie Laufräder, Lenker, Sattel, Schaltung, Bremsen und dergleichen, auf. Durch eine derartige Austarierung des Fahrrads beim Tragen ist das Tragen deutlich vereinfacht.

Nachfolgend wird die Erfindung anhand einer bevorzugten Ausführungsform unter Bezugnahme auf die anliegende Zeichnung näher erläutert.

Die Fig. zeigt eine bevorzugte Ausführungsform des erfindungsgemäßen Fahrradrahmens in Seitenansicht.

Der Fahrradrahmen weist ein Unterrohr 10 auf, das zwischen einer Tretlageraufnahme 12 und einem Gabelrohr 14 angeordnet ist. Das Gabelrohr 14 dient zur Aufnahme des Gabelschafts der Vorderradgabel. Ferner weist der Fahrradrahmen eine Sattelrohr 16 auf, das ausgehend von der Tretlageraufnahme 12 nach oben verläuft. An einem oberen Ende 18 ist das Sattelrohr offen und dienst zur Aufnahme des den Sattel tragenden Sattelstützrohrs. Ferner weist der Fahrradrahmen ein Oberrohr 20 auf, das mit dem Sattelrohr 16 und dem Gabelrohr 14 verbunden ist. Zwei einander gegenüberliegende Kettenstreben 22 sind mit der Tretlageraufnahme 12 und einem Ausfallende 24 verbunden. Ferner sind wiederum zwei einander gegenüber liegende Sattelstreben 26 vorgesehen, die ausgehend von dem Ausfallende 24, das zur Aufnahme der Hinterradachse des Hinterrads dient, zum Sattelrohr 16 verlaufen.

Das Oberrohr 20 weist einen ersten Abschnitt 28 und einen sich anschließenden zweiten im Wesentlichen horizontal verlaufenden Abschnitt 30 auf. Ausgehend vom Sattelrohr 16 ist der erste Abschnitt 28 steigend ausgebildet. Der Abschnitt 28 weist somit gegenüber einer Horizontalen 32 einen Winkel α auf. Der Winkel α ist vorzugsweise größer als 30° und insbesondere größer als 40°.

Der erste Abschnitt 28 geht in einem Übergangsbereich 34 in den zweiten Abschnitt 30 über. Eine Unterkante 36 des Oberrohrs 20 ist im Übergangsbereich 34 gebogen, insbesondere konkav ausgebildet.

Zwischen dem ersten Abschnitt 28 und dem zweiten Abschnitt 30 ist ein Winkel β im Bereich von 120° bis 160°, insbesondere 120° bis 140° ausgebildet.

Durch diese Rahmengeometrie ist ein Bereich 38 durch das Unterrohr 10, dass Sattelrohr 16 und das Oberrohr 20 begrenzt ist vergrößert, so dass der Tragekomfort verbessert ist.

Eine Unterkante 40 der Sattelstreben 26 geht stufenlos in eine Unterkante 42 des ersten Abschnitts 28 über.

Ferner ist zwischen dem Sattelrohr 16 und dem ersten Abschnitt 28 des Oberrohrs 20 ein Verbindungselement 44 angeordnet. Dies füllt den Bereich eines oberen Endes 46 des Sattelrohrs 16 und des ersten Abschnitts 28, insbesondere vollständig aus. Des Weiteren ist eine durch das obere Ende 18 des Sattelrohrs 16 gebildete Oberkante derart ausgebildet, dass diese sowohl in eine Oberkante 48 des Verbindungselements 44 als auch an eine Oberkante 50 des ersten Abschnitts 28 stufenfrei übergeht. Die Oberkante 50 des ersten Abschnitts geht konvex gekrümmt in die Oberkante 52 des Übergangsbereichs 34 und sodann in die Oberkante 54 des zweiten Abschnitts 30 über.

Insbesondere um eine UCI-konforme Ausgestaltung des Fahrradrahmens zu gewährleisten kann in Seitenansicht eine gerade Linie A derart durch das Oberrohr 20 gelegt werden, dass diese zwischen dem Gabelrohr 14 und dem Sattelrohr 16 stets innerhalb des Oberrohrs 20 verläuft. Die Linie A verläuft somit innerhalb des ersten Abschnitts 28, innerhalb des Übergangsbereichs 34 sowie auch innerhalb des zweiten Abschnitts 30 des Oberrohrs 20. In ihrer dargestellten Ausführungsform berührt die Linie A einen Verbindungsbereich 56 zwischen dem zweiten Abschnitt 30 des Oberrohrs 20 und dem Gabelrohr 14. Ferner berührt die Linie A eine Innenseite des Oberrohrs 20 im Übergangsbereich 34 zwischen dem ersten Abschnitt 28 und dem zweiten Abschnitt 30.

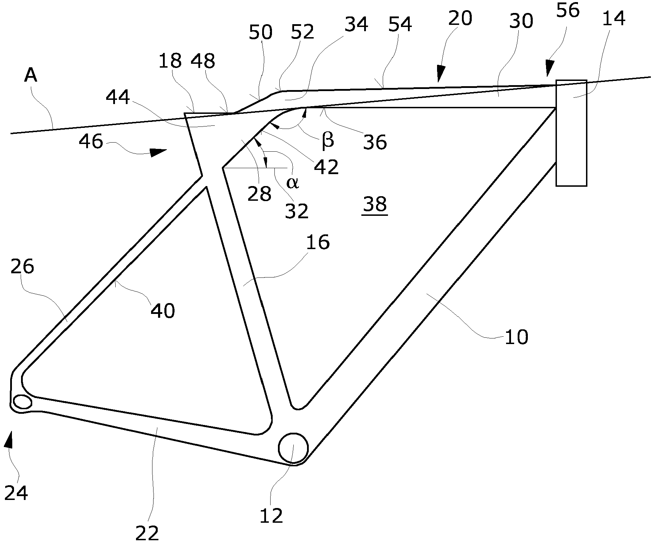

## Patentansprüche

1. Fahrradrahmen, insbesondere Rennradrahmen, mit
einem zwischen einer Tretlageraufnahme (12) und einem Gabelrohr (14) angeordneten Unterrohr (10),
einem mit der Tretlageraufnahme (12) verbundenen Sattelrohr (16) und
einem zwischen dem Sattelrohr (16) und dem Gabelrohr (14) angeordneten Oberrohr (20)
**dadurch gekennzeichnet, dass**
das Oberrohr (20) in einem mit dem Sattelrohr (16) verbundenen ersten Abschnitt (28) einen Winkel α zur Horizontalen (32) von mehr als 30°, insbesondere mehr als 60° aufweist und/oder
zwischen dem mit dem Sattelrohr (16) verbundenen ersten Abschnitt (28) des Oberrohrs (20) und einem sich hieran anschließenden zweiten Abschnitt (30) des Oberrohrs (20) einen Winkel β von 120° bis 160° und insbesondere von 130° bis 150° vorgesehen ist.

2. Fahrradrahmen nach Anspruch 1, **dadurch gekennzeichnet, dass** zwischen dem Gabelrohr (14) und dem Sattelrohr (16) eine gerade Linie (A) angeordnet werden kann, die innerhalb des Oberrohrs (20) verläuft.

3. Fahrradrahmen nach Anspruch 2, **dadurch gekennzeichnet, dass** die Linie (A) einen Verbindungsbereich (56) zwischen dem Oberrohr (20) und dem Gabelrohr (14) berührt.

4. Fahrradrahmen nach einem der Ansprüche 1 bis 3, **dadurch gekennzeichnet, dass** der erste Abschnitt (28) länger als 5 cm, insbesondere länger als 7 cm und besonders bevorzugt länger als 10 cm ist.

5. Fahrradrahmen nach einem der Ansprüche 1 bis 4, **dadurch gekennzeichnet, dass** der erste Abschnitt (28) kürzer als 20 cm, insbesondere kürzer als 17 cm und besonderes bevorzugt kürzer als 15 cm ist.

6. Fahrradrahmen nach einem der Ansprüche 1 bis 5, **dadurch gekennzeichnet, dass** der zweite Abschnitt (30) gradlinig ausgebildet und mit dem Gabelrohr (14) verbunden ist.

7. Fahrradrahmen nach einem der Ansprüche 1 bis 6, **dadurch gekennzeichnet, dass** der zweite Abschnitt (30) im Wesentlichen horizontal ausgerichtet ist.

8. Fahrradrahmen nach einem der Ansprüche 1 bis 6, **dadurch gekennzeichnet, dass** der zweite Abschnitt (30) in Richtung des Gabelrohrs (14) leicht steigend ausgebildet ist.

9. Fahrradrahmen nach einem der Ansprüche 1 bis 6, **dadurch gekennzeichnet, dass** der zweite Abschnitt (30) in Richtung des Gabelrohrs (14) leicht fallend ausgebildet ist.

10. Fahrradrahmen nach Anspruch 8 oder 9, **dadurch gekennzeichnet, dass** der zweite Abschnitt (30) zur Horizontalen (32) einen Winkel von weniger als 20° insbesondere weniger als 10° aufweist.

11. Fahrradrahmen nach einem der Ansprüche 1 bis 10, **dadurch gekennzeichnet, dass** ein oberes Ende (46) des Sattelrohrs (16) unterhalb einer Oberkante (52) im Übergangsbereich (34) zwischen dem ersten Abschnitt (28) und dem zweiten Abschnitt (30) des Oberrohrs (20) angeordnet ist.

12. Fahrradrahmen nach einem der Ansprüche 1 bis 11, **dadurch gekennzeichnet, dass** zwischen einem oberen Ende (46) des Sattelrohrs (16) und dem ersten Abschnitt (28) des Oberrohrs (20) ein Verbindungselement (44) vorgesehen ist, das den Zwischenraum vorzugsweise vollständig ausfüllt.

13. Fahrradrahmen nach einem der Ansprüche nach einem der Ansprüche 1 bis 12, **gekennzeichnet durch** zwischen Ausfallenden (24) und Sattelstützrohr (16) angeordneten Sattelstreben (26), die in den ersten Abschnitt (28) des Oberrohrs (20) übergehen.

14. Fahrradrahmen nach Anspruch 13, **dadurch gekennzeichnet, dass** eine Unterkante (40) der Sattelstreben (26) in eine Unterkante (42) des ersten Abschnitts (28) des Oberrohrs (20) insbesondere gradlinig übergeht.
